**Europäisches Patentamt**

**European Patent Office**

**Office européen des brevets**

(19)

(11) Veröffentlichungsnummer: **0 093 221**
**A1**

## (12) EUROPÄISCHE PATENTANMELDUNG

(21) Anmeldenummer: **82810189.9**

(22) Anmeldetag: **05.05.82**

(51) Int. Cl.³: **G 01 G 21/24**

(43) Veröffentlichungstag der Anmeldung:
**09.11.83 Patentblatt 83/45**

(84) Benannte Vertragsstaaten:
**AT BE CH DE FR GB IT LI NL SE**

(71) Anmelder: **WIRTH, GALLO & CO**
**Sonnenbergstrasse 55**
**CH-8032 Zürich(CH)**

(72) Erfinder: **Wirth, Johannes**
**Sonnenbergstrasse 55**
**CH-8032 Zürich(CH)**

(54) **Waage.**

(57) Derart gegen Störkräfte geschützte Waage, dass im Bereich der mässigen Seitenschläge keine empfindliche Störung des Wägebetriebes entsteht, mit einem Gestell (1), einem parallel geführten Lastträger (2), einer Waagplatte (6), einem Mess-System (4) und zwischen dem Gestell und der Waagplatte angeordneten Anschlägen (9) (10), welche Waagplatte sich über mindestens zwei schwenkbare Tragelemente (7) auf den Lastträger stützt, die an ihrem oberen Ende eine horizontale Auflagefläche (14) für die Waagplatte aufweisen und an ihrem unteren Ende über ein Gelenk mit Rückstellmoment am Lastträger befestigt sind.

Fig. 1

EP 0 093 221 A1

**0093221**

Wirth, Gallo & Co.                              Zürich

---

Waage

---

Die vorliegende Erfindung bezieht sich auf eine Waage mit einem Gestell, einem parallel geführten Lastträger, einer Waagplatte, einem Mess-System und zwischen dem Gestell und der Waagplatte angeordneten Anschlägen.

Waagen dieser Gattung sind bekannt und gehören zum Stand der Technik. Sie weisen pendelnde Stelzen auf, sodass sich bei kleineren Seitenschlägen die Waagplatte ohne das Gestell zu berühren in horizontaler Richtung bewegen kann. Die relative horizontale Lage der Enden der Stelzen bezüglich des Lastträgers bzw. der Waagplatte ist über passende Mittel festgelegt. Bei stärkeren seitlichen Schlägen, werden die auftretenden Kräfte von den am Gestell vorgesehenen Anschlägen aufgenommen und somit die Amplitude der horizontalen Bewegung begrenzt. In diesem Falle ist jedoch das Resultat der Wägung dermassen gestört, dass die Waage vorübergehend ausser Betrieb ist.

Fall 141
Ueberlastsicherung

Bei mässigen Seitenschlägen, treten kleinere Störungen des Resultates auf, die den Wägevorgang erschweren oder verlangsamen. Bei der Wägung starrer Lasten entsteht die Störung dadurch, dass die pendelnde Bewegungen der Waagplatte zu senkrechten Beschleunigungen führen. Bei flüssigen, zähflüssigen oder gel-artige Lasten entstehen zusätzliche Messfehler, da der Schwerpunkt der Last eine zusätzliche, senkrechte Beschleunigung erfährt.

Die der Erfindung zu Grunde liegende Aufgabe bestand darin, diese Mängel der bekannten Bauart derart auszumerzen, dass im Bereich der mässigen Seitenschläge keine empfindliche Störung des Wägebetriebes entsteht.

Diese Aufgabe wird erfindungsgemäss dadurch gelöst, dass sich die Waagplatte über mindestens zwei schwenkbare Tragelemente auf den Lastträger stützt, die an ihrem oberen Ende eine horizontale Auflagefläche für die Waagplatte aufweisen und an ihrem unteren Ende über ein Gelenk mit Rückstellmoment am Lastträger befestigt sind.

In der beiliegenden Zeichnung sind Ausführungsbeispiele des Erfindungsgegenstandes schematisch dargestellt.

Es zeigen:
Fig. 1    einen schematischen Aufriss einer Waage mit teilweisem Schnitt,
Fig. 2-5  je eine Ausführungsvariante.

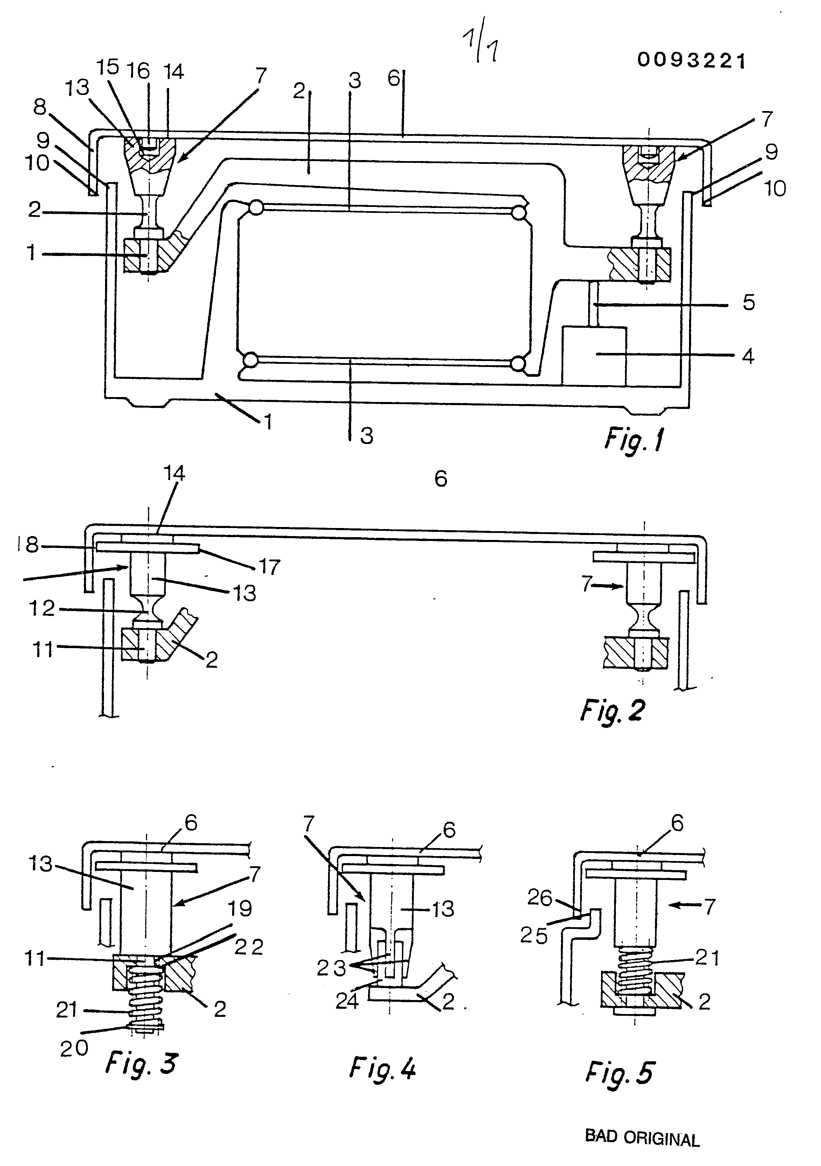

Die in Fig. 1 dargestellte Waage weist ein Gestell 1 und einen Lastträger 2 auf. Letzterer ist mittels Lenker 3 bezüglich des Gestelles 1 parallel geführt. Ferner ist im Gestell 1 ein Mess-System 4 zur Aufnahme der Last befestigt, das über eine Stelze 5 den Lastträger 2 trägt. Eine Waagplatte 6 stützt sich über vier Tragelemente 7 auf den Lastträger 2. Diese Waagplatte 6 hat eine viereckige Form und die vier Tragelemente 7 sind unter ihren vier Ecken angeordnet. Die Ränder 8 der Waagplatte 6 sind nach unten verbogen. Ihre Enden bilden zusammen mit dem oberen Rand des Gestelles 1 Anschläge 9, 10.

Jedes Tragelement 7 besteht aus einem im Lastträger 2 eingespannten Schaft 11, einem elastischen Gelenk 12 und einem konischen, starren Kopf 13. Letzterer weist eine horizontale Auflagefläche 14 auf, die die entsprechende Ecke der Waagplatte 6 trägt. Ferner ist der Kopf 13 mit einer Bohrung 15 versehen, in welche ein an der unteren Seite der Waagplatte 6 angebrachter Mitnehmer 16 mit Spiel eingreift. Das Verhältnis der Durchmesser der Bohrung 15 und des Mitnehmers 16 ist in der Grössenordnung von 10:9.

Bei belasteter Waagplatte 6, wenn kleinere Seitenschläge auf die Waage einwirken, werden die Tragelemente 7 von leicht schräg orientierten Kräften belastet. Sofern die Richtung dieser Kräfte innerhalb eines Kegels mit Spitze im Mittelpunkt des Gelenkes 12 und Mantelfläche entsprechend derjenigen des Kopfes 12 liegt, so verbiegt sich das Gelenk 12 nicht und diese Kräfte werden über die Lenker 3 auf das Gestell 1 übertragen. Bei grösseren Schlägen wird das statische Gleichgewicht der Waage nicht mehr gewährleistet. Die einwirkenden Kräfte werden durch eine Verbiegung der Gelenke 12 aufgenommen. Während dieser Verbiegung sind die untere Seite der Waagplatte 6 und Auflageflächen 14 zueinander nicht mehr parallel. Die Rückstellmomente einerseits der Gelenke 12 und andererseits der Last, die jetzt am Rand der Auflagefläche exzentrisch wirkt, führen alle Teile in die vor dem Schlag herrschende Lage zurück. Die Waagplatte 6 führt dann eine durch die Reibung zwischen den im Kontakt stehenden Teile gedämpfte Schwingung aus. Bei noch grösseren Seitenschlägen wird die Schwingung der Waagplatte 6 durch die Anschläge 9, 10 begrenzt.

Bei dieser Ausführung der Tragelemente 7 genügt es zwei der Tragelemente wie oben beschrieben auszubilden, während die zwei anderen als starre Stelzen bekannter Bauart eingesetzt werden können.

In der Ausführung nach Fig. 2 ist der Kopf 13 des Tragelementes 6 zylindrisch ausgebildet. Er weist ferner einen Kragen 17 auf.

Wird die Waagplatte 8 einem Seitenschlag ausgesetzt, so wird die Funktion der Mitnehmer 16 nach Fig. 1 vom inneren Rand 18 der Waagplatte 6 übernommen, die mit dem Kragen 17 in Kontakt kommt, sodass die Tragelemente 7 entsprechend der Bewegung der Waagplatte 6 belastet werden. Je nach Richtung der Störkraft, werden zwei oder drei der Tragelemente 7 belastet. Bei dieser Ausführung, wie bei den Ausführungen nach Fig. 3-5, müssen daher alle vier, unter den vier Ecken der Waagplatte 6 angeordneten Tragelemente 7 gleich ausgebildet werden.

In der Ausführung nach Fig. 3 liegt der Schaft 11 mit Spiel in einer Bohrung 19 des Lastträgers 2. Das Verhältnis der Durchmesser des Schaftes 11 und der Bohrung 19 ist in der Grössenordnung 10:9. Das untere Ende des Schaftes 7 trägt eine Scheibe 20. Eine vorgespannte Feder 21 ist zwischen dieser Scheibe 20 und einer Schulterfläche 22 der Bohrung 19 angeordnet.

Die Ausführung nach Fig. 4 ist eine Variante der Ausführung nach Fig. 2, bei welcher das Gelenk von vier symmetrisch angeordneten, elastischen Zungen 23 gebildet wird, die einen am Lastträger 2 befestigten Zapfen 24, vorzugsweise mit Vorspannung, fassen.

Die Ausführung nach Fig. 5 ist eine Variante der Ausführung nach Fig. 3, bei welcher die Feder 21 oberhalb des Lastträgers 2 angeordnet ist, sodass ein zusätzlicher Schutz der Waagplatte 6 gegen senkrechte Schläge entsteht. Die Anschläge 25, 26 sind entsprechend ausgebildet.

In der Beschreibung der Ausführungsbeispiele, ist die Waage als Lenkerwaage dargestellt. Es versteht sich, dass die beschriebenen Tragelemente ebenso in Waagen mit von den Lenkern getrenntem Lastaufnehmer, Hebelparallelführung, Saiten- und Magnetkompensationslastaufnehmer, sowie mit Dehnungsmessstreifen Anwendung finden können.

**0093221**

PATENTANSPRUECHE

1. Waage mit einem Gestell, einem parallel geführten Lastträger, einer Waagplatte, einem Mess-System und zwischen dem Gestell und der Waagplatte angeordneten Anschlägen, dadurch gekennzeichnet, dass sich die Waagplatte über mindestens zwei schwenkbare Tragelemente auf den Lastträger stützt, die an ihrem oberen Ende eine horizontale Auflagefläche für die Waagplatte aufweisen und an ihrem unteren Ende über ein Gelenk mit Rückstellmoment am Lastträger befestigt sind.

2. Waage nach Anspruch 1, dadurch gekennzeichnet, dass die genannte obere horizontale Auflagefläche eine Bohrung aufweist, in welche ein auf der unteren Seite der Waagplatte befestigter Mitnehmer eingreift.

3. Waage nach Anspruch 1, dadurch gekennzeichnet, dass sie mit vier Tragelementen versehen ist, die unterhalb der Auflagefläche einen Kragen aufweisen, der mit dem inneren Rand der Waagplatte zusammenwirkt.

4. Waage nach Anspruch 1, dadurch gekennzeichnet, dass das genannte Gelenk aus mindestens einem elastischen Teil besteht.

5. Waage nach Anspruch 1, dadurch gekennzeichnet, dass das genannte Gelenk aus einem federbelasteten Schaft besteht.

1/7

0093221

Fig. 1

Fig. 2

Fig. 3

Fig. 4

Fig. 5

# 0093221

Nummer der Anmeldung

**Europäisches Patentamt**

## EUROPÄISCHER RECHERCHENBERICHT

EP 82 81 0189

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | G 01 G 21/24 |
| A | CH-A- 618 509 (METTLER INSTRUMENTE AG) * Ansprüche 1-3 * | 1 | |
| | --- | | |
| A | FR-A-2 112 216 (METTLER INSTRUMENTE AG) * Ansprüche 1-13 * | 1 | |
| | --- | | |
| A | DE-A-2 830 345 (SARTORIUS GmbH) * Ansprüche 1-8 * | 1 | |
| | --- | | |
| A | DE-B-1 194 169 (BIZERBA-WERKE WILHELM KRAUT K.G.) * Ansprüche 1-4 * | 1 | |
| | --- | | **RECHERCHIERTE SACHGEBIETE (Int. Cl. 3)** |
| A | DE-B-1 024 257 (MAATSCHAPPIJ VAN BERKEL'S PATENT N.V.) * Anspruch * | 1 | G 01 G |
| | --- | | |
| A | US-A-3 877 532 (J.D. HALE) * Anspruch 1 * | 1 | |
| | --- | | |
| A | US-A-4 261 428 (C.D. BRADLEY) * Anspruch 1 * | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 18-01-1983 | VAN DEN BULCKE E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82